Europäisches Patentamt

European Patent Office

Office européen des brevets

(11) Veröffentlichungsnummer: **0 250 699**
**B1**

(12) **EUROPÄISCHE PATENTSCHRIFT**

(45) Veröffentlichungstag der Patentschrift:
01.08.90

(51) Int. Cl.⁵: **F16F 15/12**, F16F 15/16

(21) Anmeldenummer: 87100895.9

(22) Anmeldetag: 23.01.87

(54) Schwungrad.

(30) Priorität: 01.07.86 DE 3621997

(43) Veröffentlichungstag der Anmeldung:
07.01.88 Patentblatt 88/1

(45) Bekanntmachung des Hinweises auf die Patenterteilung:
01.08.90 Patentblatt 90/31

(84) Benannte Vertragsstaaten:
DE FR GB IT SE

(56) Entgegenhaltungen:
EP-A- 0 212 041
DE-A- 3 418 671
DE-A- 3 440 927
GB-A- 2 151 332

(73) Patentinhaber: Firma Carl Freudenberg, Höhnerweg 2-4,
D-6940 Weinheim/Bergstrasse(DE)

(72) Erfinder: Grassmuck, Volker, Ahornstrasse 36,
D-6940 Weinheim(DE)
Erfinder: Jörg, Benno, Am Drachenstein 27,
D-6940 Weinheim(DE)
Erfinder: Sommer, Eberhard, Goethestrasse 4,
D-6947 Laudenbach(DE)

**Beschreibung:**

Die Erfindung betrifft ein Schwungrad, umfassend einen mit der Antriebswelle verbundenen, ersten Schwungring und einen mit der Antriebswelle verbundenen, zweiten Schwungring, die relativ verdrehbar und konzentrisch ineinander gelagert sind, wobei zur Unterdrückung von Drehschwingungen zwischen dem ersten und dem zweiten Schwungring parallel zueinander eine Feder und eine Dämpfungseinrichtung vorgesehen sind und wobei die Dämpfungseinrichtung aus Dämpfungselementen besteht, die in einer einander überlappenden Zuordnung dämpfungswirksam sind.

Eine solche Dämpfungseinrichtung ist aus der DE-A 3 418 671 bekannt. Die Dämpfungseinrichtung ist dabei amplitudenunabhängig wirksam, jedoch durch die sich bei einer hohen Wellendrehzahl ergebenden Fliehkräfte abschaltbar, wodurch bei Erreichen einer hohen Wellendrehzahl der erste und der zweite Schwungring nur noch durch die Feder drehelastisch aufeinander abgestützt sind. Die Unterdrückung störender Drehschwingungen gelingt hiermit nur unvollkommen.

Der Erfindung liegt die Aufgabe zugrunde, ein Schwungrad der eingangs genannten Art zu zeigen, bei dem die Übertragung störender Schwingungen unter normalen Betriebsbedingungen weitgehend ausgeschlossen ist.

Diese Aufgabe wird erfindungsgemäß durch die kennzeichnenden Merkmale von Anspruch 1 gelöst.

Durch die erfindungsgemäß vorgeschlagene Ausbildung des Schwungrades werden Schwingungen im Bereich kleiner, die Nullage umschließender Winkelverdrehungen durch die zu der Feder parallel geschaltete Dämpfungseinrichtung hochgradig gedämpft. Die störende Übertragung solcher Schwingungen wird dadurch sicher vermieden, desgleichen die Gefahr des Auftretens von Resonanzschwingungen mit erhöhter Amplitude.

Bei Einleitung von Schwingungen einer größeren Amplitude wird bei Überschreitung des ersten Winkelmaßes die Dämpfungseinrichtung außer Betrieb gesetzt. Es ist dann nur noch die Feder allein wirksam, was zu einer ausgezeichneten Isolierung entsprechender Schwingungen durch die Nachgiebigkeit der Feder führt. Die Schwingungen können daher nicht mehr störend über das Schwungrad übertragen werden.

Zweckmäßige Weiterbildungen der Erfindung nach Anspruch 1 sind in den Unteransprüchen beschrieben.

Die Feder und die Dämpfungseinrichtungen können ringförmig ausgebildet und dem ersten und dem zweiten Schwungring konzentrisch zugeordnet sein.

Eine Unwuchtigkeit wird hierdurch vermieden und erlaubt eine problemlose Verwendung des vorgeschlagenen Schwungrades in Antriebssträngen, in denen höchste Drehzahlen auftreten.

Die Feder kann aus gummielastischem Werkstoff bestehen. Dieser Werkstoff weist im Gegensatz zu metallischen Werkstoffen eine Eigendämpfung auf, was zu einem schnelleren Abklingen hochfrequenter Schwingungen führt sowie zu einer gewissen Entlastung der eigentlichen Dämpfungseinrichtung. Es versteht sich von selbst, daß aufgrund des erheblichen graduellen Unterschiedes in der Wirksamkeit die Eigendämpfung gummielastischer Werkstoffe die Verwendung der zusätzlich vorgesehen Dämpfungseinrichtung nicht ersetzen kann.

Die gummielastische Feder kann einander radial umschließende Halteflächen des ersten und des zweiten Schwungringes verbinden. Hierdurch wird eine besonders kurze axiale Baulänge des Schwungrades erreicht, was den Einbau erleichtert. Eine Verminderung des Durchmessers läßt sich dadurch erreichen, daß die Feder einander axial gegenüberliegende Halteflächen des ersten und des zweiten Schwungrades verbindet.

Auch die Anwendung von Mischformen zwischen beiden Ausführungen kann in die Überlegungen mit einbezogen werden, somit von Ausführungsformen, bei denen mindestens eine Feder an einander axial gegenüberliegenden Halteflächen des ersten und des zweiten Schwungringes festgelegt ist und mindestens eine weitere Feder an einander radial umschließenden Halteflächen des ersten und des zweiten Schwungringes. Die koaxiale Führung beider Schwungringe ineinander erfährt hierdurch eine Verbesserung.

Die Schwungringe können außerhalb der Halteflächen einen Abstand von der Feder haben. Eventuell eingeleitete Wärme wird hierdurch von der Feder ferngehalten, was in Hinblick auf die Erzielung einer guten Gebrauchsdauer von Vorteil ist, wenn die Feder aus einem polymeren Werkstoff besteht.

Bei einer solchen Ausführungsform kann der durch den Abstand gebildete Hohlraum gegenüber dem relativ verdrehbaren Schwungring abgedichtet und mit einer Flüssigkeit gefüllt sein. In Abhängigkeit von der eingeleiteten Drehzahl baut sich in der Flüssigkeit fliehkraftbedingt ein Druck auf, der bei sachgerechter Auslegung geeignet ist, eine fliehkraftbedingte Deformierung der Feder weitgehend auszuschließen oder ganz zu unterdrücken. Die Verwendung des Schwungrades in Anwendungen, in denen hohe Drehzahlen auftreten, wird hierdurch erleichtert.

Die Dämpfungselemente können durch miteinander verpreßte Reibelemente des ersten und des zweiten Schwungringes gebildet sein, wobei die Reibelemente eine Umfangserstreckung haben, die mit dem ersten Winkelmaß im wesentlichen übereinstimmt und wobei die Reibelemente in den dazwischenliegenden Umfangssektoren ausgespart sind. Bei einer das erste Winkelmaß überschreitenden Relativverdrehung der Schwungringe kommen die beiderseitigen Reibbeläge außer Eingriff, wodurch die beiden Schwungringe ohne jeden weiteren Reibungswiderstand allein gegen die Kraft der Feder verdrehbar sind. Die beiderseitigen Reibelemente können einander radial umschließen. Aus Gründen der einfachen Herstellbarkeit wird jedoch einer Ausführung der Vorzug gegeben, bei der die Reibelemente einander axial zugeordnet und axial verpreßt sind.

Anspruch 7 nimmt Bezug auf eine Ausführung, bei der die Feder ringförmig gestaltet ist, aus gummielastischem Werkstoff besteht und die

2

Schwungringe unter Bildung eines mit einer viskosen Flüssigkeit einer Viskosität von 100 bis 200 000 cSt gefüllten, abgedichteten Hohlraumes verbindet, wobei die Dämpfungselemente aus in den Hohlraum eintauchenden, gleichmäßig in Umfangsrichtung verteilten Zähnen des einen Schwungringes und gleichmäßig in Umfangsrichtung verteilten Vorsprüngen des anderen Schwungringes besteht, wobei die Zähne (23) und die Vorsprünge (24) eine Umfangserstreckung haben, die mit dem ersten Winkelmaß im wesentlichen übereinstimmt und wobei die in Umfangsrichtung aufeinander folgenden Vorsprünge und Zähne durch Aussparungen voneinander getrennt sind. Entsprechende Vorsprünge bzw. Zähne können auch an den Hohlraum begrenzenden, relativ bewegbaren Flächen der Feder und des Schwungringes vorgesehen sein.

Die Bereiche relativer Verdrehbeweglichkeit, in denen die beiden Schwungringe federnd und zusätzlich gedämpft verbunden sind, bzw. nur federnd, können durch das erste Winkelmaß beliebig gegeneinander abgegrenzt sein. Ein Winkelmaß von ±30° soll nicht unterschritten werden. Im allgemeinen Maschinenbau hat sich ein solches von ±10° als vorteilhaft bewährt, im Bereich der Kraftfahrzeug-Technik ein solches von ±5°. Je nach Anwendungsgebiet gelingt es so in jedem Falle, eine optimale Unterdrückung störender Drehschwingungen im gesamten Frequenzbereich zu erzielen.

Der kleinste Abstand der Zähne und der Vorsprünge soll höchstens 0,5 mal so groß sein wie der Abstand der übrigen den Hohlraum in gleicher Richtung begrenzenden Flächen. Er wird bei Relativverdrehungen der Schwungringe innerhalb des ersten Winkelmaßes erhalten und durch eine gegenseitige Überlappung der Zähne und der Vorsprünge angezeigt. Bedingt durch die große Viskosität der im Zwischenraum enthaltenen Dämpfungsflüssigkeit resultiert eine große Dämpfungswirkung. Verdrehschwingungen einer kleinen Amplitude werden hierdurch in dem die statische Nullage umschließenden Bereich hochgradig gedämpft, während die sich bei Überschreitung des ersten Winkelmaßes ergebende Dämpfungswirkung je nach maßlicher Abstimmung vernachlässigbar gering ist. Auch bei dieser Ausbildung der Dämpfungseinrichtung resultiert eine differenzierte Dämpfungswirksamkeit in bezug auf die Einleitung von Drehschwingungen einer unterschiedlich großen Amplitude. Sie wird in diesem Falle jedoch unter Verzicht auf die Verwendung von verschleißbeanspruchten Präzisionsteilen erzielt, was unter dem Gesichtspunkt einer kostengünstigen Herstellbarkeit sowie der Erzielung einer besonders langen Gebrauchsdauer von Vorteil ist.

In einigen Anwendungsfällen hat es sich bewährt, wenn die unterschiedlich großen Abstände zwischen den einander gegenüberliegenden Dämpfungszonen ein- oder mehrfach abgestuft ineinander übergehen. Der Grad der erzielten Dämpfungswirkung sinkt in diesem Falle ab in Abhängigkeit von dem Grad der relativen Verdrehung beider Schwungringe, was beispielsweise bei einem plötzlichen Lastwechsel eines Motors von Vorteil ist.

Der kleinste Abstand der Zähne und der Vorsprünge kann gleichmäßig in den größeren Abstand übergehen, den die übrigen, sich in gleicher Richtung erstreckenden und den Hohlraum begrenzenden Flächen voneinander haben. Stoßartige Dämpfungskraftänderungen, die unter Umständen eine impulsartige Anregung des gesamten Antriebsstranges eines KFZ zur Folge haben können, lassen sich hierdurch vermeiden.

Die insgesamt erzielte Dämpfungswirkung ist maßgeblich abhängig von der Größe der relativ beweglichen und von der Dämpfungsflüssigkeit benetzten Flächen. Diese lassen sich bei Bedarf vergrößern durch Anbringung wenigstens eines ringförmig vorspringenden Ansatzes an der Feder und/oder dem ersten und/oder dem zweiten Schwungring. Der guten Ordnung halber wird auf die EP-A 0 212 041 verwiesen, die gemäß Artikel 54(3) EPÜ für die Vertragsstaaten Deutschland, Frankreich, Großbritannien und Italien zu berücksichtigen ist. Hierin wird ein Schwungrad beschrieben umfassend einen mit der Antriebswelle verbundenen, ersten Schwungring und einen mit der Abtriebswelle verbundenen, zweiten Schwungring, die relativ verdrehbar und konzentrisch ineinander gelagert sind, wobei zur Unterdrückung von Drehschwingungen zwischen dem ersten und dem zweiten Schwungring parallel zueinander eine Feder und eine Dämpfungseinrichtung vorgesehen sind und wobei die Dämpfungseinrichtung aus Dämpfungselementen besteht, die in einer einander überlappenden Zuordnung dämpfungswirksam und in Abhängigkeit von der Größe der Verdrehamplitude der Schwungringe in einen nicht überlappenden Zustand bringbar sind, derart, daß der erste und der zweite Schwungring nur durch die Feder verbunden sind.

Die Dämpfungselemente gelangen dabei erst bei großen Verdrehamplituden der beiden Schwungringe in eine einander überlappende, gegenseitige Zuordnung und zur Dämpfungswirksamkeit, während die Schwungringe bei kleinen Verdrehamplituden nur durch die Feder verbunden und die Dämpfungselemente wirkungslos geschaltet sind. Eine Übertragung störender Schwingungen läßt sich hierdurch nur in unzureichendem Maße unterbinden.

Die Erfindung wird nachfolgend anhand der als Anlage beigefügten Zeichnung weiter erläutert. Es zeigen:

Figur 1 ein Schwungrad, bei dem die Mitnehmerscheibe mit Reibelementen versehen und in Umfangsrichtung fest mit den Mitnehmern des sie tragenden Schwungringes verbunden ist.

Figur 2 ein Schwungrad, bei dem die Feder zwischen einander radial umschließenden Halteflächen der Schwungringe angeordnet ist und bei der die Dämpfungseinrichtung aus einem Viskositätsdämpfer besteht.

Figur 3 eine Ausführung ähnlich Figur 2, bei der die Feder an einen axialen Abstand aufweisenden Halteflächen der Schwungringe festgelegt ist.

Figuren 4 bis 7 zwei Ausführungen von Viskositätsdämpfern in zerlegtem und montiertem Zustand, bei denn die miteinander überlappbaren Vorsprünge und Zähne im dargestellten, relativ verdrehten Zustand der Schwungringe einen größeren senkrechten Abstand voneinander haben als in dem unverdrehten Zustand gegenseitiger Überlappung. Im letztgenannten Falle ergibt sich eine relativ vergrößerte Dämpfungswirkung, die zu der Kraft der Feder parallel geschaltet ist.

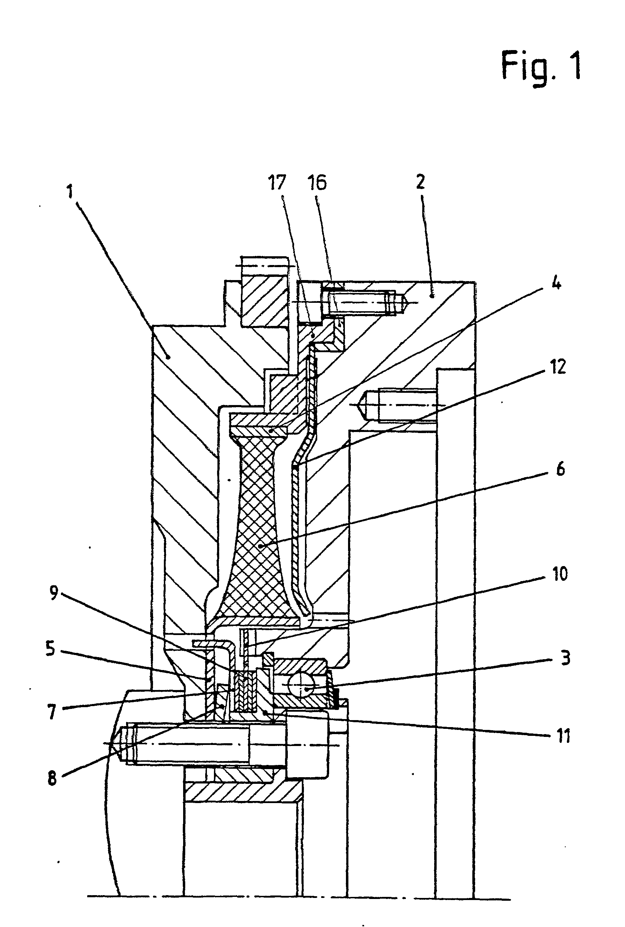

Das in Figur 1 in halbgeschnittener Darstellung wiedergegebene Schwungrad ist zur Verwendung zwischen dem Motor und dem Getriebe eines Kraftfahrzeuges bestimmt. Es umfaßt antriebsseitig den mit dem Anlasserritzel versehenen ersten Schwungring 1 und abtriebsseitig den nach dem Einbau die nicht dargestellte Kupplungsscheibe aufnehmenden, zweiten Schwungring 2. Der erste Schwungring 1 und der zweite Schwungring 2 sind durch die Lagerung 3 relativ verdrehbar, konzentrisch ineinander gelagert. Sie umschließen einen kreisringförmigen Hohlraum, in dem die Feder 6 angeordnet ist.

Die Feder 6 ist von kreisringförmiger Gestalt und besteht aus gummielastischem Werkstoff. Sie ist außenseitig durch Vulkanisation mit dem Haltering 4 verbunden, innenseitig durch Vulkanisation mit dem Haltering 5. Der Haltering 4 ist unter Zwischenfügung eines Zwischenflansches 17 und einer Wärmedämmscheibe 16 mit dem zweiten Schwungring 2 verschraubt, der Haltring 5 mit dem ersten Schwungring 1. Die Wärmedämmscheibe 16 ist radial nach innen verlängert zu dem kreisförmig gestalteten Wärmeschirm 12.

Der Haltering 5 ist von winkelförmigem Profil und weist in dem sich in radialer Richtung nach innen erstreckenden Bereich gleichmäßig auf dem Umfang verteilte Durchbrechungen auf, in welche die axial vorspringenden Fingerfortsätze 10 des Andrückringes 7 eingreifen. Der Andrückring 7 weist auf der von den Fingerfortsätzen 10 abgewandten Seite kreissegmentförmige Erhebungen 20 auf, die gleichmäßig auf dem Umfang verteilt sind. Mit identisch ausgebildeten Erhebungen, die den vorgenannten spiegelbildlich zugeordnet sind, ist auch der Winkelring 11 versehen. Die Übergangszonen zu den axial zurückspringenden Umfangsflächen des Andrückringes 7 und des Winkelringes 11 sind jeweils abgerundet ausgeführt.

Axial zwischen den die Vorsprünge 20 tragenden Bereichen des Andrückringes 7 und des Winkelringes 11 ist die Mitnehmerscheibe 9 angeordnet. Diese ruht gemeinsam mit dem Andrückring 7 auf einem Gleitlager des Winkelringes 11 und ist in axialer Richtung beiderseits mit den Erhebungen 20 des Andrückringes 7 und des Winkelringes 11 zugeordneten Dämpfungselementen 18, 20 versehen. Die Tellerfeder 8 bewirkt eine gegenseitige Verpressung des Andrückringes 7, der Mitnehmerscheibe 9 und des Winkelringes 11 in axialer Richtung. Der Winkelring 11 und der Andrückring 7 sind in bezug zueinander und in bezug zu dem ersten Schwungring 1 unverdrehbar, die Mitnehmerscheibe 9 in bezug zu dem zweiten Schwungring 2. Die jeweilige Mitnahme wird durch eine Verschraubung bzw. Fingerfortsätze 10 bewirkt, die unter Vermeidung eines Spiels in Umfangsrichtung in entsprechend gestaltete Ausnehmungen des ersten und des zweiten Schwungringes 1, 2 eingreifen.

Die auf den beiden axialen Begrenzungsflächen der Mitnehmerscheibe 9 angeordneten Dämpfungselemente sind als Ringsegmente ausgebildet und abwechselnd mit dem Gleitbelägen 19 auf dem Umfang der Mitnehmerscheibe 9 verteilt. Sie schließen bei dem gezeigten Ausführungsbeispiel unmittelbar aneinander an. Die Dämpfungselemente 18 und die Gleitbeläge 19 sind jeweils alle von gleicher Größe. Die Dämpfungselemente 18 werden durch Bremsbeläge mit hohem Reibungskoeffizienten gebildet, die Gleitbeläge 19 durch ein Material, das einen extrem niedrigen Reibungskoeffizienten aufweist. Die auf den beiden Seiten angeordneten Dämpfungselemente 18 sind einander spiegelbildlich zugeordnet. Das gleiche trifft zu in bezug auf die Gleitbeläge 19.

Die Mitnehmerscheibe 9 ist dem Andrückring 7 und dem Winkelring 11 so zugeordnet, daß sich in der statischen Ruhelage des Drehschwingungsdämpfers eine möglichst weitgehende Überlappung zwischen den durch Bremsbeläge gebildeten Dämpfungselementen 18 einerseits und den Vorsprüngen andererseits ergibt. Eine Relativverdrehung der Mitnehmerscheibe 9 in bezug auf den Andrückring 7 und den Winkelring 11 erfordert daher zu Beginn die Überwindung eines erheblichen Reibungswiderstandes, was im Rahmen der vorliegenden Erfindung zur verstärkten Dämpfung von Schwingungen kleiner Verdrehamplitude genutzt wird.

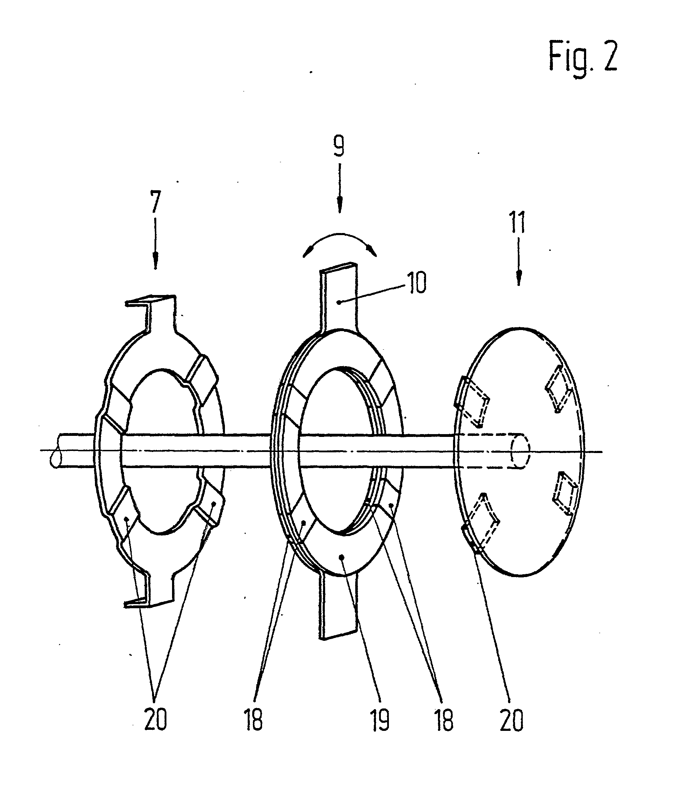

Bei einer noch größeren Relativverdrehung zwischen der Mitnehmerscheibe 9 einerseits und dem Andrückring 7 und dem Winkelring 11 andererseits gelangen die Erhebungen 20 und die durch Bremsbeläge gebildeten Dämpfungselemente 18 der Mitnehmerscheibe 9 zunehmend außer Deckung, was den Reibungswiderstand zunehmend vermindert. Die Dämpfungswirkung sinkt im gleichen Maße und verhindert das Auftreten von Reaktionskräften. Der schematische Aufbau ist in Figur 2 gezeigt.

Der zweite Schwungring 2 ist im Bereich seines Innenumfanges mit in die Zwischenräume der Fingerfortsätze 10 eingreifenden, axialen Vorsprüngen versehen. Diese bewirken eine Übertragung der Drehbewegung auf die Fingerfortsätze 10, wodurch die durch die Teile 5, 7, 8, 9 und 11 gebildete Dämpfungseinrichtung nach Überschreiten einer bestimmten Mindestverdrehung des ersten Schwungringes 1 in bezug auf den zweiten Schwungring 2 zunehmend unwirksam wird, bis die durch Erhebungen gebildeten Dämpfungselemente 20 des Andrückringes 7 und des Winkelringes 11 schließlich nur noch auf den Gleitbelägen 19 mit geringerem Reibkoeffizienten gleiten. Der an dem zweiten Schwungring 2 festgelegte Wärmeschirm 12 dient der Isolierung der aus gummielastischem Werkstoff bestehenden Feder 6 vor unerwünschter Erwärmung.

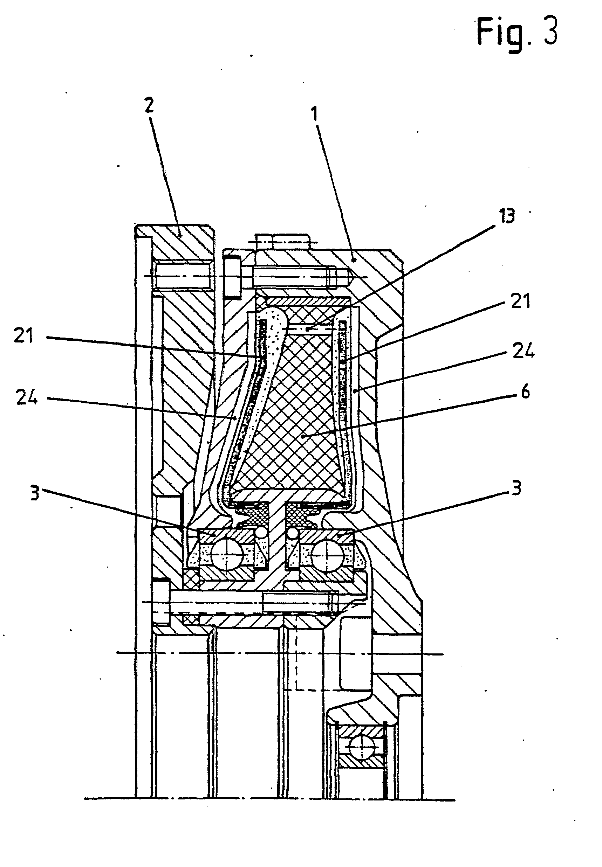

Die in Figur 3 gezeigte Ausführung ist der vorstehend beschriebenen ähnlich. Auch in diesem Falle ist die aus gummielastischem Werkstoff bestehende Feder 6 von kreisringförmiger Gestalt und aneinander in radialer Richtung umschließenden Halteflächen des ersten Schwungringes 1 und des zweiten Schwungringes 2 festgelegt. Die Feder 6 hat beiderseits einen axialen Abstand von den gegenüberliegenden Begrenzungswänden des ersten Schwungringes 1, und die so gebildeten Hohlräume sind gegenüber dem zweiten Schwungring 2 dynamisch abgedichtet und mit Silikonöl der Viskosität von 100 bis 200 000 cSt gefüllt. Von diesem werden zugleich die in die Hohlräume eintauchenden Zahnscheiben 21 beiderseits benetzt, welche im Bereich ihres Innenumfanges an dem zweiten Schwungring 2 festgelegt sind. Der erste Schwungring 1 ist mit taschenförmigen Ausnehmungen versehen, die den Zwischenräumen der Zähne der Zahnscheiben 21 gegenüberliegend zugeordnet sind. Eine relative Verdrehung des ersten Schwungringes 1 in bezug auf den zweiten Schwungring 2 hat dadurch neben einer elastischen Verformung der Feder 6 eine Viskositätsdämpfung der Bewegung zur Folge. Die die Feder 6 in axialer Richtung beiderseits begrenzenden, flüssigkeitsgefüllten Hohlräume stehen durch den im Bereich des Außenumfanges der Feder 6 angeordneten Kanal 13 in Verbindung. Die durch eine Drehbewegung in den beiden Räumen entstehende Drucksteigerung ist daher vollkommen ausgeglichen und gewährleistet eine gute mechanische Abstützung der Feder 6 gegen fliehkraftbedingte Deformierungen.

Auch eine einseitige Wärmebeaufschlagung vermag die diesbezüglich guten Verhältnisse nicht zu verändern. Die Ausführung eignet sich daher für Anwendungsfälle, in denen höchste Belastungen auftreten.

Am einfachsten lassen sich Verformungen der Feder 6 durch die Verwendung einer Flüssigkeit kompensieren, die dieselbe Dichte hat wie der Werkstoff der Feder 6. Entsprechende Flüssigkeiten sind bekannt. Ein Auffüllen des vorhandenen Freiraumes der sich drehenden Wellenkupplung bis zur radial inneren Begrenzungsfläche der Feder 6 führt in diesem Falle zu vollem Erfolg.

In Fällen, in denen die Feder 6 eine größere Dichte aufweist als die Flüssigkeit, läßt sich ein entsprechendes Ergebnis erzielen durch eine die radiale Innenfläche der Feder nach innen weisende Überstauung bei sich drehender Wellenkupplung. Die Höhe der im Einzelfalle erforderlichen Überstauung läßt sich im Versuch exakt ermitteln oder auch errechnen. Ein besonderer Aufwand ist hinsichtlich der diesbezüglichen Feinarbeit jedoch in den meisten Fällen entbehrlich und zumindest teilweise durch Erfahrungswissen ersetzbar.

Der die Flüssigkeit enthaltende Freiraum ist in radialer Richtung nach außen und in axialer Richtung beiderseits flüssigkeitsundurchlässig begrenzt. Er bedarf durch die ringförmige Verteilung des enthaltenen Flüssigkeitsvolumens bei sich drehender Welle auch in dem radial innenliegenden Bereich an sich keiner sekundären Abdichtung, wenn sichergestellt ist, daß das betriebsnotwendige Flüssigkeitsvolumen bei Wellenstillstand nicht entweichen kann.

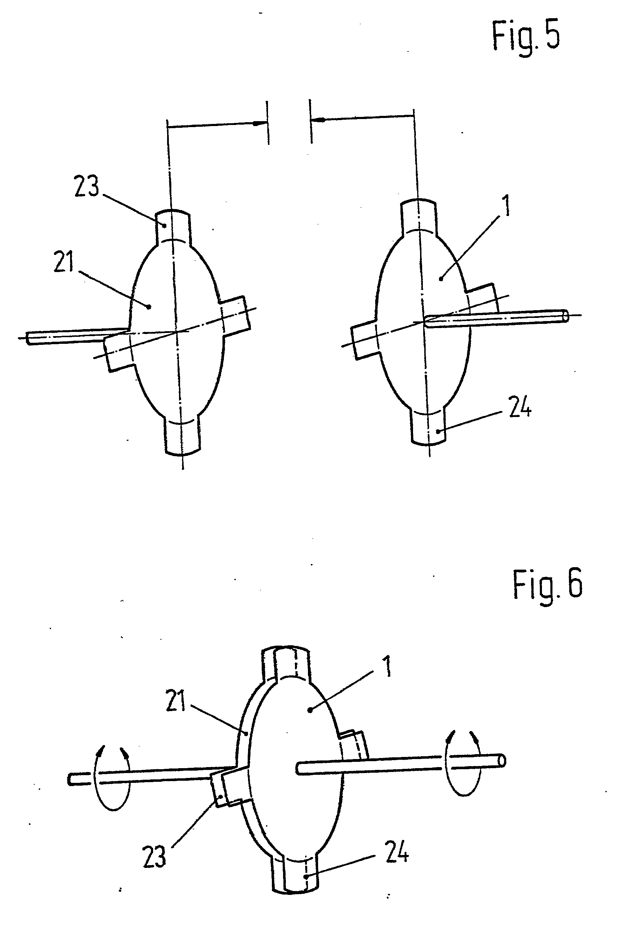

Die Verwendung einer Dichtung zwischen den beiden Flanschen in dem genannten Bereich ist jedoch möglich und empfiehlt sich insbesondere dann, wenn die Einhaltung der vorgenannten Bedingung nicht möglich oder zu befürchten ist, daß sich während des normalen Betriebes der Wellenkupplung Fremdstoffe in den Freiraum einlagern. Insbesondere die Verwendung von Bewegungsdichtungen hat sich ausgezeichnet bewährt. Ihre Anbringung in anderen Zonen der Wellenkupplung ist ebenfalls möglich, erfordert jedoch eine spezielle Berücksichtigung des sich fliehkraftbedingt ergebenden Druckaufbaues im Freiraum. Eine Zuordnung zum Innendurchmesser der Wellenkupplung wird daher bevorzugt. Die Wirkung wird anhand der Figuren 5 und 6 erläutert.

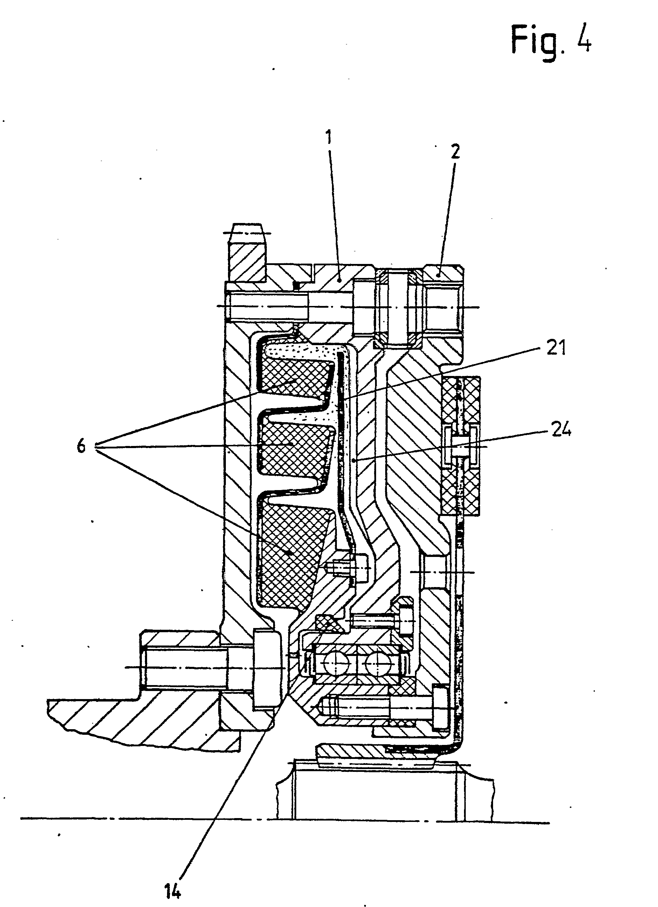

Das in Figur 4 gezeigte Schwungrad ist funktionell dem vorstehend beschriebenen ähnlich. Auch in diesem Falle gelangt ein Viskositätsdämpfer zur Anwendung, bei dem die Feder 6 wegen ihrer Festlegung an einen axialen Abstand aufweisenden Halteflächen des ersten Schwungringes 1 und des zweiten Schwungringes 2 indessen nur außenseitig von viskoser Flüssigkeit benetzt ist. Diese füllt den vorhandenen Freiraum bei sich drehendem Schwungrad bis zu etwa zu einem Drittel der Höhe der radial inneren Begrenzungsfläche der Feder aus und verhindert so fliehkraftbedingte Deformierungen bei beiden äußeren Federn. Die Flüssigkeit ist daher nur in einem einzigen in sich geschlossenen Hohlraum enthalten und zur dynamischen Abdichtung dieses Hohlraumes genügt daher im Gegensatz zur vorstehend beschriebenen Ausführung ein einziger Dichtring 14.

Die Feder 6 wurde bei der Ausführung nach Figur 4 zur Reduzierung der axialen Baulänge in drei einander in radialer Richtung umschließende Ringe unterteilt. Diese sind hinsichtlich ihres Querschnittes so aufeinander abgestimmt, daß sich bei einer gegenseitigen Verdrehung der beiden Schwungringe in allen drei Fällen dieselbe Querschnittsbelastung ergibt. Für die Herstellung aller drei Ringe genügt daher ein einziger Werkstoff von bestimmter Nachgiebigkeit, was die Herstellung erleichtert.

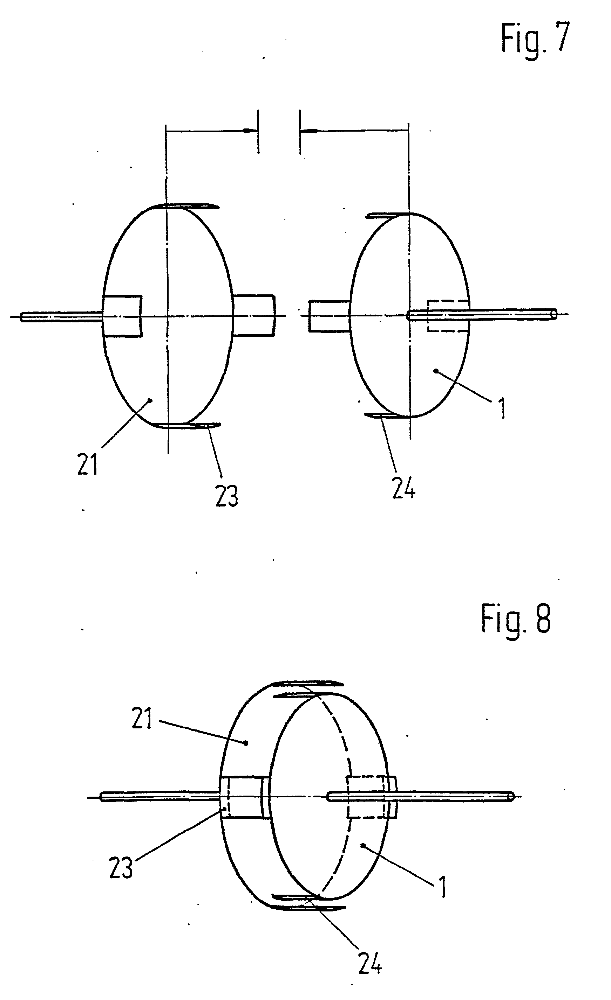

Die Figuren 5 bis 8 sollen Aufbau und Wirkungsweise von Viskositätsdämpfern ähnlich Figur 3 und 4 verdeutlichen. Die Viskositätsdämpfer sind in den Figuren 5 und 7 in zerlegter Form dargestellt, in den Figuren 6 und 8 in der sich bei der Montage ergebenden, gegenseitigen Zuordnung. Beide gezeigten Viskositätsdämpfer umfassen von der viskosen Flüssigkeit benetzte Zahnscheiben 21, deren Zähne 23 in der statischen Ruhelage einen geringen axialen bzw. radialen Abstand von entsprechend ausgebildeten Vorsprüngen 24 des relativ bewegten Schwungringes 1 haben. Die Zahnscheiben 21 sind in bezug auf den ruhenden Schwungring unverdrehbar festgelegt. Ihre Zähne überlappen die Vorsprünge des relativ bewegbaren Schwungringes in der statischen Ruhelage mit geringem Abstand, wobei es funktionstechnisch ohne weitere Bedeutung ist, ob die gegenseitige Zuordnung der Zähne zu den Vorsprüngen in axialer Richtung vorgenommen wird, wie in den Figuren 5 und 6 gezeigt, oder in radialer Richtung, wie in den Figuren 7 und 8 gezeigt. Auch andere gegenseitige Zuordnungen sind ohne weiteres möglich, und es ist lediglich entscheidend, daß sich in der statischen Ruhelage eine möglichst weitgehende Überdeckung der einander zugewandten Flächen der Zähne 23 und der Vorsprünge 24 ergibt. Die Zähne 23 sind bei Einleitung einer Relativverdrehung in geringem Abstand an den Vorsprüngen 24 vorbeiführbar, wobei sich durch das in den Zwischenraum zwischen beiden Teilen enthaltene, viskose Medium eine hochgradige Dämpfungswirkung ergibt. Mit zunehmender Größe der Relativverdrehung sinkt der Anteil, in dem die einander zugewandten Flächen der Zähne 23 und der Vorsprünge 24 einander überdecken. Die resultierende Dämpfungswirkung sinkt in gleichem Maße und fällt ab auf einen vernachlässigbaren Wert, wenn keinerlei Überlappung zwischen den vorgenannten Flächen mehr vorhanden ist. Eine Übertragung von Reaktionskräften ist dann weitgehend ausgeschlossen.

Es ist leicht einsehbar, daß die sich ergebende Dämpfungswirkung durch eine Veränderung des gegenseitigen Abstandes und der Größe der einander zugewandten Flächen der Zähne 23 und der Vorsprünge 24 bzw. durch eine Veränderung der Viskosität der enthaltenen Flüssigkeit auf nahezu jede Charakteristik einstellbar ist.

Eine hochgradig gedämpfte Relativverdrehbarkeit von ±10° hat sich im allgemeinen als vorteilhaft bewährt.

## Patentansprüche

1. Schwungrad, umfassend einen mit der Antriebswelle verbundenen, ersten Schwungring (1) und einen mit der Abtriebswelle verbundenen, zweiten Schwungring (2), die relativ verdrehbar und konzentrisch ineinander gelagert sind, wobei zur Unterdrückung von Drehschwingungen zwischen dem ersten und dem zweiten Schwungring (1, 2), parallel zueinander eine Feder (6) und eine Dämpfungseinrichtung vorgesehen sind und wobei die Dämpfungseinrichtung aus Dämpfungselementen (18, 20; 21, 24) besteht, die in einer einander überlappenden Zuordnung dämpfungswirksam sind, dadurch gekennzeichnet, daß die Dämpfungselemente (18, 20; 21, 24) nur im Bereich von die Nullage umschließenden Relativverdrehungen der Schwungringe (1, 2) um ein erstes Winkelmaß einander überlappend zugeordnet und bei das erste Winkelmaß überschreitenden Relativverdrehungen der Schwungringe (1, 2) einander ohne Überlappung zugeordnet und die Schwungringe (1, 2) nur durch die Feder (6) verbunden sind.

2. Schwungrad nach Anspruch 1, dadurch gekennzeichnet, daß das erste Winkelmaß kleiner ist als 30°.

3. Schwungrad nach Anspruch 1, dadurch gekennzeichnet, daß erste Winkelmaß kleiner ist als 10°.

4. Schwungrad nach Anspruch 1, dadurch gekennzeichnet, daß das erste Winkelmaß kleiner ist als 5°.

5. Schwungrad nach Anspruch 1 bis 4, dadurch gekennzeichnet, daß die Dämpfungselemente (18, 20) durch miteinander verpreßte Reibelemente des ersten und des zweiten Schwungringes (1, 2) gebildet sind, daß die Reibelemente eine Umfangserstreckung haben, die mit dem ersten Winkelmaß im wesentlichen übereinstimmt und daß sie in den dazwischenliegenden Umfangssektoren ausgespart sind.

6. Schwungrad nach Anspruch 5, dadurch gekennzeichnet, daß die Dämpfungselemente (18, 20) einander axial zugeordnet sind.

7. Schwungrad nach Anspruch 1 bis 4, dadurch gekennzeichnet, daß die Feder (6) ringförmig gestaltet ist, aus gummielastischem Werkstoff besteht und die Schwungringe (1, 2) unter Bildung eines mit einer viskosen Flüssigkeit einer Viskosität von 100 bis 200000 cSt gefüllten, abgedichteten Hohlraumes verbindet, daß die Dämpfungselemente aus in den Hohlraum eintauchenden, gleichmäßig in Umfangsrichtung verteilten Zähnen (23) des einen Schwungringes (1, 2) und Vorsprüngen (24) des anderen Schwungringes (2, 1) bestehen, daß die Zähne (23) und die Vorsprünge (24) einander zugewandt sind und eine Umfangserstreckung haben, die mit dem ersten Winkelmaß im wesentlichen übereinstimmt und daß die in Umfangsrichtung aufeinander folgenden Zähne (23) und Vorsprünge (24) durch Aussparungen voneinander getrennt sind.

8. Schwungrad nach Anspruch 7, dadurch gekennzeichnet, daß sich die Zähne (23) und die Vorsprünge (24) parallel zu der Rotationsachse erstrecken.

9. Schwungring nach Anspruch 7, dadurch gekennzeichnet, daß sich die Zähne (23) und die Vorsprünge (24) senkrecht zur Rotationsachse erstrecken.

10. Schwungrad nach Anspruch 7 bis 9, dadurch gekennzeichnet, daß der kleinste Abstand der Zähne (13) und der Vorsprünge (24) maximal 0,5 mal so groß ist wie der Abstand der übrigen den Hohlraum in gleicher Richtung begrenzenden Flächen.

11. Schwungrad nach Anspruch 7 bis 10, dadurch gekennzeichnet, daß der kleinste Abstand der Zähne (23) und der Vorsprünge (24) ein- oder mehrfach abgestuft in den Abstand der übrigen den Hohlraum in der gleichen Richtung begrenzenden Flächen übergeht.

12. Schwungrad nach Anspruch 7 bis 10, dadurch gekennzeichnet, daß der kleinste Abstand der Zähne (23) und der Vorsprünge (24) gleichmäßig in den Abstand der übrigen, den Hohlraum in der gleichen Richtung begrenzenden Flächen übergeht.

## Claims

1. Flywheel comprising a first flywheel ring (1), connected to the drive shaft, and a second flywheel ring (2), connected to the output shaft, which flywheel rings are mounted concentrically one inside the other and relatively rotatable, a spring (6) and a damping device being provided parallel to each other to suppress rotational vibrations between the first and the second flywheel rings (1, 2), and the damping device being composed of damping elements (18, 20; 21, 24) which have a damping effect in an association overlapping one another, characterised in that the damping elements (18, 20; 21, 24) are associated with one another in an overlapping manner only in the range of relative rotations of the flywheel rings (1, 2) about the zero position up to a first angle size and are associated with one another without overlapping in the case of relative rotations of the flywheel rings (1, 2) exceeding the first angle size, and the flywheel rings (1, 2) are connected only by the spring (6).

2. A flywheel according to claim 13 characterised in that the first angle size is smaller than 30°.

3. A flywheel according to claim 1, characterised in that the first angle size is smaller than 10°.

4. A flywheel according to claim 1, characterised in that the first angle size is smaller than 5°.

5. A flywheel according to any of claims 1 to 4, characterised in that the damping elements (18, 20) are formed by pressed-together friction elements of the first and the second flywheel rings (1, 2), in that the friction elements have a circumferential extension which corresponds essentially to the first angle size, and in that they are recessed in the intermediate circumferential sectors.

6. A flywheel according to claim 5, characterised in that the damping elements (18, 20) are associated with one another axially.

7. A flywheel according to any of claims 1 to 4, characterised in that the spring (6) is of circular design, is composed of a rubber-elastic material and connects the flywheel rings (1, 2) with formation of a sealed-off cavity filled with a viscous liquid with a viscosity of 100 to 200,000 cSt, in that the damping elements are composed of teeth (23) of the one flywheel ring (1, 2), which teeth protrude into the cavity and are distributed evenly in the circumferential direction, and projections (24) of the other flywheel ring (2, 1), in that the teeth (23) and the projections (24) face one another and have a circumferential extension which corresponds essentially to the first angle size, and in that the teeth (23), following successively in the circumferential direction, and the projections (24) are separated from one another by recesses.

8. A flywheel according to claim 7, characterised in that the teeth (23) and the projections (24) extend parallel to the axis of rotation.

9. A flywheel ring according to claim 7, characterised in that the teeth (23) and the projections (24) extend perpendicular to the axis of rotation.

10. A flywheel according to any of claims 7 to 9, characterised in that the smallest spacing of the teeth (13) [sic] and of the projections (24) is at most 0.5 times as large as the spacing of the remaining surfaces limiting the cavity in the same direction.

11. A flywheel according to any of claims 7 to 10, characterised in that the smallest spacing of the teeth (23) and of the projections (24) merges in one or more stages into the spacing of the remaining surfaces limiting the cavity in the same direction.

12. A flywheel according to any of claims 7 to 10, characterised in that the smallest spacing of the teeth (23) and of the projections (24) merges evenly into the spacing of the remaining surfaces limiting the cavity in the same direction.

**Revendications**

1. Volant comprenant une première bague de volant (1) connectée à l'arbre moteur et une deuxième bague de volant (2) connectée à l'arbre entraîné, qui sont montées concentriquement l'une dans l'autre avec possibilité de rotation relative dans lequel, pour éliminer les vibrations de rotation, un ressort (6) et un dispositif d'amortissement parallèles l'un à l'autre sont prévus entre la première et la deuxième bague de volant (1, 2) et dans lequel le dispositif d'amortissement est constitué d'éléments d'amortissement (18, 20; 21, 24) qui ont un effet d'amortissement lorsqu'ils sont disposés avec chevauchement mutuel, caractérisé en ce que les éléments d'amortissement (18, 20; 21, 24) sont disposés avec chevauchement mutuel dans un premier domaine angulaire, uniquement dans la zone des rotations relatives des bagues de volant (1, 2) entourant la position zéro tandis que, en cas de rotation relative des bagues de volant (1, 2) dépassant le premier domaine angulaire, ils sont disposés sans chevauchement mutuel et que les bagues de volant (1, 2) ne sont assemblées que par le ressort (6).

2. Volant selon la revendication 1, caractérisé en ce que le premier domaine angulaire est plus petit que 30°.

3. Volant selon la revendication 1, caractérisé en ce que le premier domaine angulaire est plus petit que 10°.

4. Volant selon la revendication 1, caractérisé en ce que le premier domaine angulaire est plus petit que 5°.

5. Volant selon les revendications 1 à 4, caractérisé en ce que les éléments d'amortissement (18, 20) sont constitués par des éléments à frottement de la première et de la deuxième bague de volant (1, 2) pressés les uns contre les autres, en ce que les éléments à frottement ont une certaine extension périphérique qui correspond essentiellement au premier domaine angulaire et qu'ils sont évidés dans les secteurs intermédiaires de la périphérie.

6. Volant selon la revendication 5, caractérisé en ce que les éléments d'amortissement (18, 20) sont disposés axialement les uns par rapport aux autres.

7. Volant selon les revendications 1 à 4, caractérisé en ce que les ressorts (6) ont une forme annulaire, sont constitués de matériau élastique à base de caoutchouc et assemblent les bagues de volant (1, 2) en formant une cavité fermée hermétiquement et remplie d'un liquide visqueux ayant une viscosité de 100 à 200000 cSt, en ce que les éléments d'amortissement sont constitués des dents (23) d'une bague de volant (1, 2) et des saillies (24) de l'autre bague de volant (2, 1) réparties uniformément sur la périphérie et plongeant dans la cavité, en ce que les dents (23) et les saillies (24) sont tournées les unes vers les autres et ont une extension périphérique qui correspond essentiellement au premier domaine angulaire, et en ce que les dents (23) et les saillies (24) se succédant les unes aux autres en direction de la périphérie sont séparées les unes des autres par des cavités.

8. Volant selon la revendication 7, caractérisé en ce que les dents (23) et les saillies (24) s'étendent parallèlement à l'axe de rotation.

9. Bague de volant selon la revendication 7, caractérisée en ce que les dents (23) et les saillies (24) s'étendent perpendiculairement à l'axe de rotation.

10. Volant selon les revendications 7 à 9, caractérisé en ce que la plus petite distance des dents (23) et des saillies (24) est au maximum égale à 0,5 fois la distance des autres surfaces délimitant la cavité dans la même direction.

11. Volant selon les revendications 7 à 10, caractérisé en ce que la plus petite distance des dents (23) et des saillies (24) passe progressivement avec un ou plusieurs gradins à la distance des autres surfaces délimitant la cavité dans la même direction.

12. Volant selon les revendications 7 à 10, caractérisé en ce que la plus petite distance des dents (23) et des saillies (24) se transforme progressivement en la distance des autres surfaces délimitant la cavité dans la même direction.

## Fig. 1

Fig. 2

# Fig. 3

Fig. 4

Fig. 5

Fig. 6

Fig. 7

Fig. 8